# EUROPÄISCHE PATENTSCHRIFT

(11) **EP 1 416 189 B1**
(45) Veröffentlichungstag und Bekanntmachung des Hinweises auf die Patenterteilung: **20.07.2005**
(21) Anmeldenummer: 03024864.5
(22) Anmeldetag: 31.10.2003
(51) Int. Cl.: F16F 9/38

(54) **Kolben-Zylinderaggregat**
Piston-cylinder unit
Unité cylindre-piston

(30) Priorität: 02.11.2002 DE 10250967; 21.10.2003 DE 10348768
(43) Veröffentlichungstag der Anmeldung: 06.05.2004
(73) Patentinhaber: Stabilus GmbH, D-56070 Koblenz (DE)
(72) Erfinder: Auer, Michael, 56332 Lehmen (DE); Hofmann, Hans Jürgen, 56348 Dahlheim (DE); Ihrlich, Hans, 56220 Kaltenengers (DE); Kistenbrügger, Ines, 56073 Koblenz (DE); Thurmann, Peter, 56323 Waldesch (DE); Schilz, Arnold, 56112 Lahnstein (DE)
(74) Vertreter: Klein, Thomas, Dipl.-Ing.

(56) Entgegenhaltungen:
- EP-A- 1 331 418
- DE-A- 2 614 927
- DE-A- 3 434 011
- DE-A- 4 209 985
- DE-A- 19 721 816
- PATENT ABSTRACTS OF JAPAN vol. 1998, no. 11, 30. September 1998 (1998-09-30) & JP 10 169691 A (SHOWA:KK), 23. Juni 1998 (1998-06-23)

## Beschreibung

Die Erfindung bezieht sich auf ein Kolben-Zylinderaggregat, insbesondere eine Gasfeder, mit einem zylindrischen Druckrohr, in dem ein Kolben axial verschiebbar geführt ist, der eine Kolbenstange aufweist, die zumindest an einem Ende des Druckrohres durch eine Öffnung in einer das Druckrohrende verschließenden Wand nach außen geführt ist, wobei das Druckrohr von einem Schrumpfschlauch umschlossen ist, der sich an der Austrittseite der Kolbenstange radial nach innen erstreckt und eine von der Kolbenstange durchragte Durchtrittsöffnung besitzt.

Bei einem derartigen Kolben-Zylinderaggregat (DE-A-197 21 816) ist es bekannt das Druckrohr durch einen aufgeschrumpften Kunststoffschlauch abzudecken, wobei der Schrumpfschlauch die eingebördelten Endbereiche des Druckrohres an deren Außenseite überdeckt. In den zum Außenbereich mündenden Spalt zwischen dem Druckrohr und dem Schrumpfschlauch kann sich Feuchtigkeit hineinziehen, durch die es nachteiligerweise zu einer Spaltkorrosion an der Außenfläche des Druckrohres kommt.

Aufgabe der Erfindung ist es daher ein Kolben-Zylinderaggregat der eingangs genannten Art zu schaffen, das auf einfache Weise an der Außenkontur des Druckrohres einen Korrosionsschutz besitzt, der auch eine Spaltkorrosion an der Außenfläche des Druckrohres vermeidet.

Diese Aufgabe wird erfindungsgemäß dadurch gelöst, daß die stirnseitige Ringfläche an dem kolbenstangenaustrittseitigen Ende des Druckrohres mit der Mündung des Spalts zwischen dem Schrumpfschlauch und der Außenfläche des Druckrohres von dem Schrumpfschlauch umschlossen ist.

Dadurch, daß der Schrumpfschlauch das Druckrohr fest umschließt, kann für das Druckrohr ein unbehandeltes Rohr verwendet und auf aufwendige Lackiervorgänge für einen Schutzfarbbelag zum Schutz des Druckrohres verzichtet werden. Darüber hinaus ist der Schrumpfschlauch wesentlich unempfindlicher gegen Kratzer und Riefen als eine Lackschicht.

Durch das Umschließen der stirnseitigen Ringfläche des Druckrohres durch den Schrumpfschlauch ist keine Mündung eines Spalts zwischen dem Schrumpfschlauch und der Außenfläche des Druckrohres vorhanden, durch die sich Feuchtigkeit in diesen Spalt hineinziehen und zu einer Spaltkorrosion an der Außenfläche des Druckrohres führen könnte.

Auf besondere Reinigungsmaßnahmen zur Vorbereitung des Druckrohres für eine Lackierung kann verzichtet werden.

Eine Entfernung des Schrumpfschlauches und ein Aufbringen eines neuen Schrumpfschlauches ist ebenfalls ohne Reinigungsmaßnahmen möglich.

Zum einfachen stirnseitigen Verschluß des Druckrohres kann das Druckrohr kolbenstangenaustrittsseitig zu einer etwa radial nach innen gerichteten Endwand umgeformt, insbesondere umgebördelt sein, die eine axial durchgehende Öffnung besitzt, wobei die durchgehende Öffnung einen größeren Durchmesser aufweist als die Kolbenstange und radial zwischen der Kolbenstange und der als zylindrische Wand der Öffnung ausgebildeten Ringfläche ein Ringspalt gebildet ist, in den der Schrumpfschlauch mit seinem mündungsseitigen Ende hineinragt.

Zur Halterung der das Druckrohr verschließenden Wand kann die das Druckrohr verschließende Wand von der etwa radial nach innen gerichteten Endwand des Druckrohres umgriffen und axial abgestützt sein.

Zur Führung der Kolbenstange und Abdichtung des Innenraums des Druckrohres nach außen kann das Druckrohr kolbenstangenaustrittsseitig durch eine Kolbenstangenführungs- und Dichteinheit verschlossen sein, durch die die Kolbenstange verschiebbar hindurchgeführt ist und die einen die verschließende Wand bildenden Abschlußring aufweist, der von der Endwand des Druckrohres umgriffen, insbesondere umbördelt ist.

Damit sich der Schrumpfschlauch über die Ringfläche des Druckrohres hinaus erstrecken kann und sich der die Kolbenstange umschließende Mündungsbereich des Schrumpfschlauches geschützt in einer Vertiefung befindet, kann der Abschlußring oder die das Druckrohr verschließende Wand eine zur Austrittsseite der Kolbenstange gerichteten Stirnseite sowie zur Ringöffnung des Abschlußrings hin offene radial umlaufende Ringnut aufweisen.

Dazu besteht eine Möglichkeit darin, daß die durchgehende Öffnung der Endwand einen gleichgroßen oder größeren Durchmesser aufweist als die äußere zylindrische radial umlaufende Wand der Ringnut.

Eine andere Möglichkeit besteht darin, daß die durchgehende Öffnung der Endwand einen kleineren Durchmesser aufweist als die äußere zylindrische radial umlaufende Wand der Ringnut.

Bei beiden Möglichkeiten ist es von Vorteil, wenn der Schrumpfschlauch mit seinem mündungsseitigen Ende ohne eine Knickbildung verrundet bis in die radial umlaufende Ringnut hineinragt.

Wenn der mündungsseitige Endbereich des Schrumpfschlauchs die etwa radial nach innen gerichtete Endwand bis an der Innenwand des Druckrohres anliegend umgreift, ist zum einen die Abdichtung des Spalts zwischen Druckrohr und Schrumpfschlauch besonders gut. Zum anderen wird der Schrumpfschlauch auch sicher in seiner diesen Spalt abdichtenden Lage gehalten.

Eine Erhöhung der Dichtwirkung wird auch erreicht wenn, der mündungsseitige Endbereich des Schrumpfschlauchs radial nach innen zur Kolbenstange gerichtet am Boden der Ringnut in Anlage ist.

Dazu dient auch, wenn der die Mündung aufweisende Endbereich des Schrumpfschlauchs radial nach innen gerichtet ist und an der zylindrischen Mantelfläche der Kolbenstange in Anlage ist.

Dabei kann der Schrumpfschlauch mit der Mündung seiner Durchtrittsöffnung die Kolbenstange umschließen.

Eine andere Möglichkeit besteht darin, daß das freie Ende des Endbereichs des Schrumpfschlauchs ring- oder rohrartig die Kolbenstange umschließt.

Ebenfalls einer Knickbildung des Schrumpfschlauchs wirkt es entgegen, wenn der Übergang von dem zylindrischen Teil des Druckrohres in die radial nach innen gerichtete Endwand abgerundet ist.

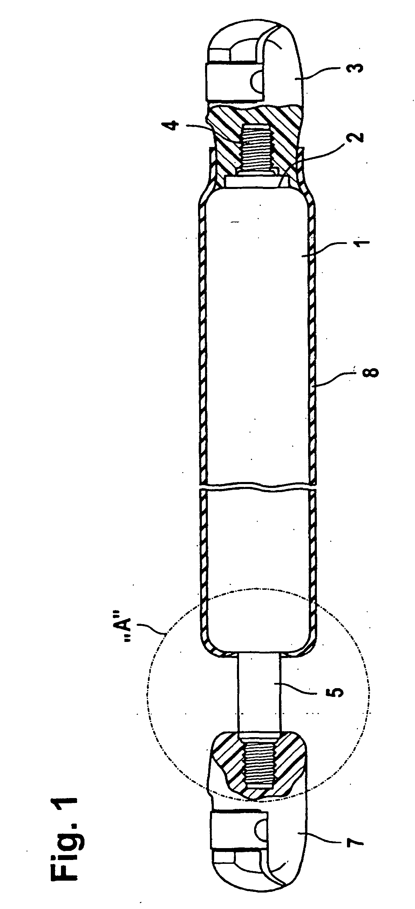

Ausführungsbeispiele der Erfindung sind in der Zeichnung dargestellt und werden im folgenden näher beschrieben. Es zeigen
- Figur 1: eine Seitenansicht einer Gasfeder
- Figur 2: ein erstes Ausführungsbeispiel eines vergrößerten Ausschnitts "A" der Gasfeder nach Figur 1 im Schnitt
- Figur 3: ein zweites Ausführungsbeispiel eines vergrößerten Ausschnitts "A" der Gasfeder nach Figur 1 im Schnitt
- Figur 4: ein drittes Ausführungsbeispiel eines vergrößerten Ausschnitts "A" der Gasfeder nach Figur 1 im Schnitt
- Figur 5: ein viertes Ausführungsbeispiel eines vergrößerten Ausschnitts "A" der Gasfeder nach Figur 1 im Schnitt
- Figur 6: ein fünftes Ausführungsbeispiel eines vergrößerten Aus schnitts "A" der Gasfeder nach Figur 1 im Schnitt
- Figur 7: ein sechstes Ausführungsbeispiel eines vergrößerten Ausschnitts "A" der Gasfeder nach Figur 1 im Schnitt

Die dargestellte Gasfeder besitzt ein Druckrohr 1, in dem ein Kolben den Innenraum in zwei Kammern unterteilend axial verschiebbar angeordnet ist. An dem einen, durch einen Boden 2 verschlossenen Ende des Druckrohres 1 ist auf einen an dem Boden 2 angeordneten Gewindezapfen 4 ein Anschlußorgan 3 zur Befestigung der Gasfeder aufgeschraubt.

Der nicht dargestellte Kolben weist eine koaxial sich erstreckende Kolbenstange 5 auf, die an dem dem Boden 2 entgegengesetzten Ende des Druckrohres 1 durch eine Kolbenstangenführungs- und Dichteinheit 6 aus dem Innenraum des Druckrohres 1 nach außen ragt.

An dem nach außen ragenden freien Ende ist die Kolbenstange 5 mit einem Gewinde versehen, auf das ein zweites Anschlußorgan 7 zur Befestigung der Gasfeder aufgeschraubt ist.

Das an seiner äußeren Oberfläche unbehandelte Druckrohr 1 ist an seiner gesamten Oberfläche von einem Schrumpfschlauch 8 als Korrosionsschutz umschlossen. Dabei umschließt der Schrumpfschlauch 8 auch einen Teil des Anschlußorgans 3.

Auf der Austrittsseite der Kolbenstange 5 ist das Ende des Druckrohres 1 abgerundet radial nach innen umgebördelt und bildet mit seinem umgebördelten Bereich eine radial zur Längsachse der Kolbenstange 5 gerichtete Endwand 9 mit einer axial durchgehenden Öffnung 10. Die Öffnung 10 der Endwand 9 weist dabei einen deutlich größeren Durchmesser auf als die Kolbenstange 5. Dadurch ist zwischen der zylindrischen Wand der Öffnung 10 und der Kolbenstange 5 ein Ringspalt 11 gebildet.

Die Kolbenstangenführungs- und Dichteinheit 6 weist an ihrem axial dem Innenraum des Druckrohres 1 zugewandeten Ende einen die Kolbenstange 5 mit einer Dichtlippe 12 umschließenden Dichtring 13 auf, der mit seiner radial umlaufenden Mantelfläche in das Druckrohr 1 dicht eingesetzt ist.

An dem dem Innenraum des Druckrohres 1 abgewandten Ende besitzt die Kolbenstangenführungs- und Dichteinheit 6 einen Abschlußring 14, der an seinem axial nach außen gerichteten, radial äußeren Ende radial umlaufend abgerundet ist. Um diese Abrundung 15 ist das Ende des Druckrohres 1 radial nach innen gebördelt, so daß der Abschlußring 14 axial an der Endwand 9 abgestützt ist.

Der Abschlußring 14 besitzt an seiner nach außen gerichteten Stirnfläche eine radial umlaufende Ringnut 16, die sowohl axial zur äußeren Stirnseite des Abschlußrings 14 als auch radial nach innen zur Kolbenstange 5 hin offen ist.

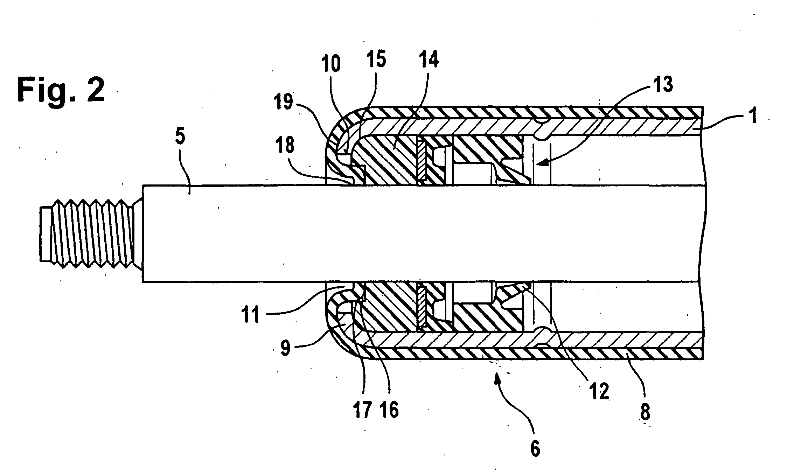

Bei dem Ausführungsbeispiel der Figur 2 ist der Durchmesser der Öffnung 10 der Endwand 9 größer als der Durchmesser der äußeren radial umlaufenden Wand 17 der Ringnut 16.

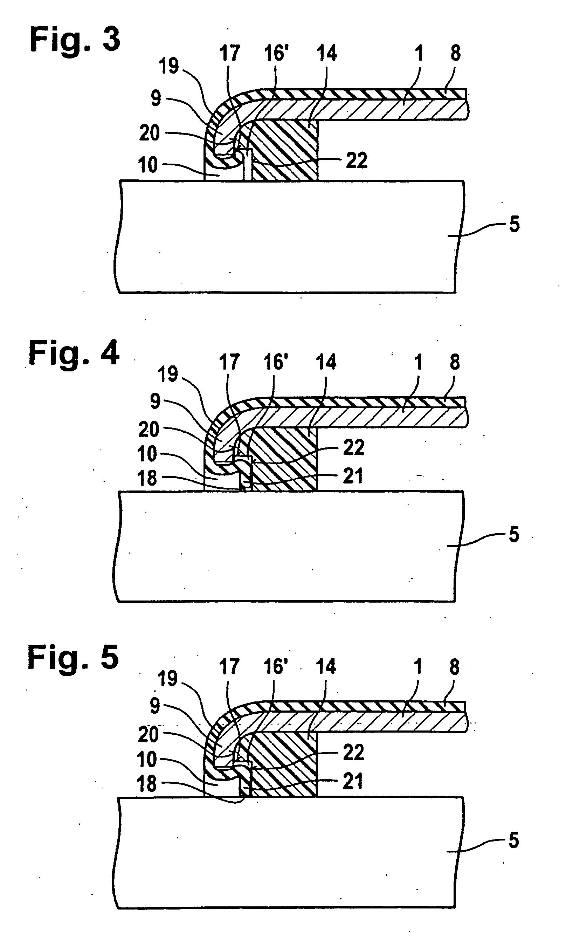

Bei den Ausführungsbeispielen der Figuren 3 bis 7 ist der Durchmesser der Öffnung 10 der Endwand 9 kleiner als der Durchmesser der äußeren radial umlaufenden Wand 17 der Ringnut 16.

In Figur 2 ist auf der Austrittsseite der Kolbenstange 5 der Schrumpfschlauch 8 an der Endwand 9 anliegend radial nach innen und die stirnseitige Ringfläche 19 der Endwand überdeckend in einem Bogen durch den Ringspalt 11 in die Ringnut 16 geführt. In der Ringnut 16 umschließt radial nach innen gerichtet der Schrumpfschlauch 8 die Kolbenstange 5 und liegt mit der Stärke seiner Wanddicke an der Kolbenstange 5 an. Dadurch wird wirksam ein Eindringen von Feuchtigkeit von außen in das Druckrohr 1 unterbunden.

In den Figuren 3 bis 7 ist der Schrumpfschlauch an der Endwand 9 anliegend radial nach innen geführt, umgreift deren stirnseitige Ringfläche 19 und erstreckt sich bis an der Innenwand 20 des Druckrohres 1 anliegend in die Ringnut 16'.
In Figur 3 endet hier der Schrumpfschlauch 8. In den Figuren 4 bis 7 ist der Schrumpfschlauch in der Ringnut 16' derart weitergeführt, daß er mit seinem mündungsseitigen Endbereich 21 radial nach innen zur Kolbenstange gerichtet am Boden 22 der Ringnut 16' in Anlage ist, wobei der Endbereich des Schrumpfschlauchs 8 in Figur 4 mit der Mündung 18 seiner Durchtrittsöffnung einen geringen Abstand zur Kolbenstange 5 aufweist, während er in Figur 5 die Kolbenstange mit seiner Mündung 18 daran anliegend umschließt.

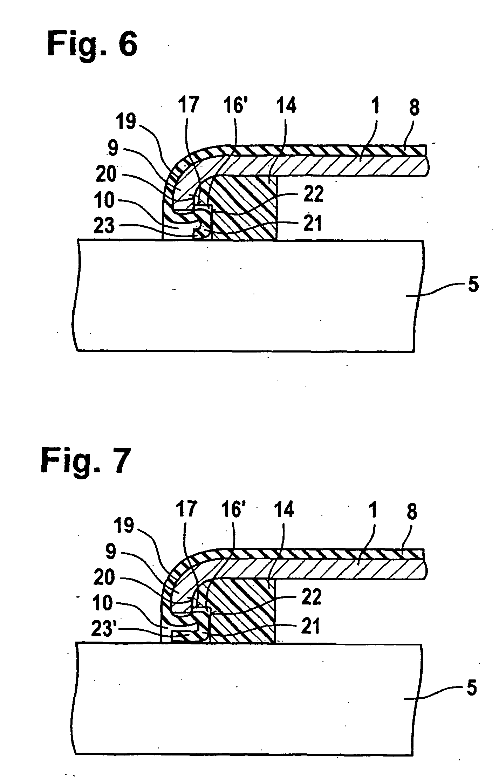

Bei den Figuren 6 und 7 ist der Endbereich des Schrumpfschlauchs 8 noch weitergeführt und umschließt die Kolbenstange 5 mit seinem freien Ende 23 bzw. 23' in Figur 6 ringartig und in Figur 7 rohrartig.

Zur Anordnung des Schrumpfschlauchs 8 besitzt dieser zunächst einen größeren Durchmesser als das Druckrohr 1 und wird über das Druckrohr 1 gestülpt. Nach einer Erwärmung des Schrumpfschlauchs 8 legt sich dieser faltenfrei am Druckrohr 1, an der Endwand 9 und der stirnseitigen Ringfläche 19 der Endwand 9 dicht an und zieht sich in den Ringspalt 11 und die Ringnut 16 hinein. Bei den Ausführungsbeispielen der Figuren 2, 5, 6 und 7 umschließt er auch noch mit seiner Mündung 18 bzw. seinem freien Ende 23 und 23' dichtend die Kolbenstange 5.

### Bezugszeichenliste

- 1: Druckrohr
- 2: Boden
- 3: Anschlußorgan
- 4: Gewindezapfen

- 5: Kolbenstange
- 6: Kolbenstangenführungseinheit
- 7: zweites Anschlußorgan
- 8: Schrumpfschlauch
- 9: Endwand
- 10: Öffnung
- 11: Ringspalt
- 12: Dichtlippe
- 13: Dichtring
- 14: Abschlußring
- 15: Abrundung
- 16: Ringnut
- 16': Ringnut

- 17: Wand
- 18: Mündung

- 19: Ringfläche
- 20: Innenwand
- 21: Endbereich
- 22: Boden
- 23: freies Ende
- 23': freies Ende

## Patentansprüche

1. Kolben-Zylinderaggregat, insbesondere Gasfeder, mit einem zylindrischen Druckrohr, in dem ein Kolben axial verschiebbar geführt ist, der eine Kolbenstange aufweist, die zumindest an einem Ende des Druckrohres durch eine Öffnung in einer das Druckrohrende verschießenden Wand nach außen geführt ist, wobei das Druckrohr von einem Schrumpfschlauch umschlossen ist, der sich an der Austrittseite der Kolbenstange radial nach innen erstreckt und eine von der Kolbenstange durchragte Durchtrittsöffnung besitzt, **dadurch gekennzeichnet, daß** die stirnseitige Ringfläche (19) an dem kolbenstangenaustrittseitigen Ende des Druckrohres (1) mit der Mündung des Spalts zwischen dem Schrumpfschlauch (8) und der Außenfläche des Druckrohres (1) von dem Schrumpfschlauch (8) umschlossen ist.

2. Kolben-Zylinderaggregat nach Anspruch 1, **dadurch gekennzeichnet, daß** das Druckrohr (1) kolbenstangenaustrittsseitig zu einer etwa radial nach innen gerichteten Endwand (9) umgeformt, insbesondere umgebördelt ist, die eine axial durchgehende Öffnung (10) besitzt, wobei die durchgehende Öffnung (10) einen größeren Durchmesser aufweist als die Kolbenstange (5) und radial zwischen der Kolbenstange (5) und der als zylindrische Wand der Öffnung (10) ausgebildeten Ringfläche (19) ein Ringspalt (11) gebildet ist, in den der Schrumpfschlauch (8) mit seinem mündungsseitigen Ende hineinragt.

3. Kolben-Zylinderaggregat nach Anspruch 2, **dadurch gekennzeichnet, daß** die das Druckrohr (1) verschließende Wand von der etwa radial nach innen gerichteten Endwand (9) des Druckrohres (1) umgriffen und axial abgestützt ist.

4. Kolben-Zylinderaggregat nach einem der Ansprüche 2 und 3, **dadurch gekennzeichnet, daß** das Druckrohr (1) kolbenstangenaustrittsseitig durch eine Kolbenstangenführungs- und Dichteinheit (6) verschlossen ist, durch die die Kolbenstange (5) verschiebbar hindurchgeführt ist und die einen die verschließende Wand bildenden Abschlußring (14) aufweist, der von der Endwand (9) des Druckrohres (1) umgriffen, insbesondere umbördelt ist.

5. Kolben-Zylinderaggregat nach einem der Ansprüche 2 bis 4, **dadurch gekennzeichnet, daß** der Abschlußring (14) oder die das Druckrohr (1) verschließende Wand eine zur Austrittsseite der Kolbenstange (5) gerichteten Stirnseite sowie zur Ringöffnung des Abschlußrings (14) hin offene radial umlaufende Ringnut (16) aufweist.

6. Kolben-Zylinderaggregat nach Anspruch 5, **dadurch gekennzeichnet, daß** die durchgehende Öffnung (10) der Endwand (9) einen gleichgroßen oder größeren Durchmesser aufweist als die äußere zylindrische radial umlaufende Wand (17) der Ringnut (16).

7. Kolben-Zylindereinheit nach Anspruch 5, **dadurch gekennzeichnet, daß** die durchgehende Öffnung (10) der Endwand (9) einen kleineren Durchmesser aufweist als die äußere zylindrische radial umlaufende Wand (17) der Ringnut (16').

8. Kolben-Zylinderaggregat nach einem der Ansprüche 6 und 7, **dadurch gekennzeichnet, daß** der Schrumpfschlauch (8) mit seinem mündungsseitigen Ende in die radial umlaufende Ringnut (16, 16') hineinragt.

9. Kolben-Zylinderaggregat nach Anspruch 7, **dadurch gekennzeichnet, daß** der mündungsseitige Endbereich (21) des Schrumpfschlauchs (8) die etwa radial nach innen gerichtete Endwand (9) bis an der Innenwand (20) des Druckrohres (1) anliegend umgreift.

10. Kolben-Zylinderaggregat nach einem der Ansprüche 5 bis 9, **dadurch gekennzeichnet, daß** der mündungsseitige Endbereich (21) des Schrumpfschlauchs (8) radial nach innen zur Kolbenstange (5) gerichtet am Boden (22) der Ringnut (16, 16') in Anlage ist.

11. Kolben-Zylinderaggregat nach den Ansprüchen 6 und 8, **dadurch gekennzeichnet, daß** der die Mündung (18) aufweisende Endbereich (21) des Schrumpfschlauchs (8) radial nach innen gerichtet ist und an der zylindrischen Mantelfläche der Kolbenstange (5) in Anlage ist.

12. Kolben-Zylinderaggregat nach Anspruch 11, **dadurch gekennzeichnet, daß** der Schrumpfschlauch (8) mit der Mündung (18) seiner Durchtrittsöffnung die Kolbenstange (5) umschließt.

13. Kolben-Zylinderaggregat nach einem der Ansprüche 10 und 11, **dadurch gekennzeichnet, daß** das freie Ende (23, 23') des Endbereichs (21) des Schrumpfschlauchs (8) ring- oder rohrartig die Kolbenstange (5) umschließt.

14. Kolben-Zylinderaggregat nach einem der Ansprüche 2 bis 13, **dadurch gekennzeichnet, daß** der Übergang von dem zylindrischen Teil des Druckrohres (1) in die radial nach innen gerichtete Endwand (9) abgerundet ist.

## Claims

1. Piston/cylinder assembly, in particular a pneumatic spring, with a cylindrical pressure tube, in which is guided axially displaceably a piston having a piston rod which, at at least one end of the pressure tube, is guided outwards through an orifice in a wall closing the pressure-tube end, the pressure tube being surrounded by a shrinkable sleeve which extends radially inwards on the exit side of the piston rod and possesses a passage orifice through which the piston rod projects, **characterized in that** the end-face annular surface (19) at that end of the pressure tube (1) which is located on the piston-rod exit side, together with the issue of the gap between the shrinkable sleeve (8) and the outer surface of the pressure tube (1), is surrounded by the shrinkable sleeve (8).

2. Piston/cylinder assembly according to Claim 1, **characterized in that** the pressure tube (1) is formed, in particular flanged, on the piston-rod exit side into an approximately radially inward-directed end wall (9) which possesses an axially continuous orifice (10), the continuous orifice (10) having a larger diameter than the piston rod (5), and there being formed, radially between the piston rod (5) and the annular surface (19) designed as a cylindrical wall of the orifice (10), an annular gap (11), into which the shrinkable sleeve (8) projects with its issue-side end.

3. Piston/cylinder assembly according to Claim 2, **characterized in that** the wall closing the pressure tube (1) is surrounded and axially supported by the approximately radially inward-directed end wall (9) of the pressure tube (1).

4. Piston/cylinder assembly according to one of Claims 2 and 3, **characterized in that** the pressure tube (1) is closed on the piston-rod exit side by means of a piston-rod guiding and sealing unit (6), through which the piston rod (5) is led displaceably and which has a closing-off ring (14) which forms the closing wall which is surrounded, in particular flanged around, by the end wall (9) of the pressure tube (1).

5. Piston/cylinder assembly according to one of Claims 2 to 4, **characterized in that** the closing-off ring (14) or the wall closing the pressure tube (1) has an end face directed towards the exit side of the piston rod (5) and also a radially continuous annular groove (16) open towards the annular orifice of the closing-off ring (14).

6. Piston/cylinder assembly according to Claim 5, **characterized in that** the continuous orifice (10) of the end wall (9) has a diameter identical to or larger than the outer cylindrical radially continuous wall (17) of the annular groove (16).

7. Piston/cylinder assembly according to Claim 5, **characterized in that** the continuous orifice (10) of the end wall (9) has a smaller diameter than the outer cylindrical radially continuous wall (17) of the annular groove (16').

8. Piston/cylinder assembly according to one of Claims 6 and 7, **characterized in that** the shrinkable sleeve (8) projects with its issue-side end into the radially continuous annular groove (16, 16').

9. Piston/cylinder assembly according to Claim 7, **characterized in that** the issue-side end region (21) of the shrinkable sleeve (8) surrounds the approximately radially inward-directed end wall (9) so as to bear against the inner wall (20) of the pressure tube (1).

10. Piston/cylinder assembly according to one of Claims 5 to 9, **characterized in that** the issue-side end region (21) of the shrinkable sleeve (8) is in bearing contact against the bottom (22) of the annular groove (16, 16') in a radially inward direction with respect to the piston rod (5).

11. Piston/cylinder assembly according to Claims 6 and 8, **characterized in that** the end region (21) of the shrinkable sleeve (8) which has the issue (18) is directed radially inwards and is in bearing contact against the cylindrical surface area of the piston rod (5).

12. Piston/cylinder assembly according to Claim 11, **characterized in that** the shrinkable sleeve (8), with the issue (18) of its passage orifice, surrounds the piston rod (5).

13. Piston/cylinder assembly according to one of Claims 10 and 11, **characterized in that** the free end (23, 23') of the end region (21) of the shrinkable sleeve (8) surrounds the piston rod (5) in a ring-like or tube-like manner.

14. Piston/cylinder assembly according to one of Claims 2 to 13, **characterized in that** the transition from the cylindrical part of the pressure tube (1) into the radially inward-directed end wall (9) is rounded.

## Revendications

1. Unité piston-cylindre, en particulier un ressort à gaz, avec un tube à pression cylindrique dans lequel un piston est guidé axialement de manière coulissante, lequel piston présente une tige de piston qui est guidée vers l'extérieur, au moins à une extrémité du tube à pression, à travers une ouverture dans une paroi fermant l'extrémité du tube à pression, le tube à pression étant entouré d'une gaine thermorétractable qui s'étend radialement vers l'intérieur du côté de sortie de la tige de piston et comporte une ouverture de passage traversée par la tige de piston, **caractérisée en ce que** la surface annulaire frontale (19) sur l'extrémité du côté de la sortie de tige de piston du tube à pression (1) avec l'orifice de l'interstice entre la gaine thermorétractable (8) et la surface extérieure du tube à pression (1) est entourée par la gaine thermorétractable (8).

2. Unité piston-cylindre selon la revendication 1, **caractérisée en ce que** le tube à pression (1) peut être façonné, en particulier rabattu, du côté de la sortie de tige de piston, vers une paroi terminale (9) orientée à peu près radialement vers l'intérieur et qui comporte une ouverture (10) axiale traversante, cette ouverture traversante (10) présentant un diamètre supérieur à la tige de piston (5) et étant formée radialement en tant qu'interstice annulaire (11) entre la tige de piston (5) et la surface annulaire (19) réalisée en tant que paroi cylindrique de l'ouverture (10), interstice annulaire dans lequel aboutit la gaine thermorétractable (8) avec son extrémité côté orifice.

3. Unité piston-cylindre selon la revendication 2, **caractérisée en ce que** la paroi refermant le tube à pression (1) est entourée par la paroi terminale (9) du tube à pression (1) orientée à peu près radialement vers l'intérieur et est soutenue axialement.

4. Unité piston-cylindre selon l'une quelconque des revendications 2 et 3, **caractérisée en ce que** le tube à pression (1) est fermé, du côté de la sortie de tige de piston, par un ensemble (6) d'étanchéité et de guidage de tige de piston, à travers lequel la tige de piston (5) est introduite de manière coulissante et qui présente une bague de fermeture (14) formant la paroi obturante et qui est entourée, en particulier par rabattement, par la paroi terminale (9) du tube à pression (1).

5. Unité piston-cylindre selon l'une quelconque des revendications 2 à 4, **caractérisée en ce que** la bague de fermeture (14) ou la paroi refermant le tube à pression (1) peut présenter une face frontale tournée vers le côté de sortie de la tige de piston (5) ainsi qu'une gorge annulaire (16) ouverte s'étendant radialement vers l'ouverture annulaire de la bague de fermeture (14).

6. Unité piston-cylindre selon la revendication 5, **caractérisée en ce que** l'ouverture traversante (10) de la paroi terminale (9) présente un diamètre égal ou plus grand que la paroi (17) cylindrique extérieure radialement périphérique de la gorge annulaire (16).

7. Unité piston-cylindre selon la revendication 5, **caractérisée en ce que** l'ouverture traversante (10) de la paroi terminale (9) présente un diamètre plus petit que la paroi (17) cylindrique extérieure radialement périphérique de la gorge annulaire (16').

8. Unité piston-cylindre selon l'une quelconque des revendications 6 et 7, **caractérisée en ce que** la gaine thermorétractable (8) pénètre, au niveau de son extrémité côté orifice, dans la gorge annulaire périphérique (16, 16').

9. Unité piston-cylindre selon la revendication 7, **caractérisée en ce que** la zone terminale (21) côté orifice de la gaine thermorétractable (8) entoure la paroi terminale (9) orientée à peu près radialement vers l'intérieur tout en y étant adjacente jusqu'à la paroi intérieure (20) du tube à pression (1).

10. Unité piston-cylindre selon l'une quelconque des revendications 5 à 9, **caractérisée en ce que** la zone terminale (21) côté orifice de la gaine thermorétractable (8) est en place sur le fond (22) de la gorge annulaire (16, 16'), tournée radialement à l'intérieur vers la tige de piston (5).

11. Unité piston-cylindre selon les revendications 6 et 8, **caractérisée en ce que** la zone terminale (21) de la gaine thermorétractable (8) présentant l'orifice (18) est tournée radialement vers l'intérieur et est en place sur la surface latérale cylindrique de la tige de piston (5).

12. Unité piston-cylindre selon la revendication 11, **caractérisée en ce que** la gaine thermorétractable (8) entoure la tige de piston (5) avec l'orifice (18) de son ouverture de passage.

13. Unité piston-cylindre selon l'une quelconque des revendications 10 et 11, **caractérisée en ce que** l'extrémité libre (23, 23') de la zone terminale (21) de la gaine thermorétractable (8) entoure la tige de piston (5) de manière annulaire ou tubulaire.

14. Unité piston-cylindre selon l'une quelconque des revendications 2 à 13, **caractérisée en ce que** la transition de la partie cylindrique du tube à pression (1) est arrondie dans la paroi terminale (9) tournée radialement vers l'intérieur.
